# EUROPEAN PATENT SPECIFICATION

(11) **EP 1 052 536 B1**
(45) Date of publication and mention of the grant of the patent: **30.06.2004**
(21) Application number: 00115576.1
(22) Date of filing: 07.04.1998
(51) Int. Cl.: G02F 1/13, G06F 1/16

(54) **LCD board for a portable computer**
LCD-Platte für tragbaren Rechner
Carte LCD pour ordinateur portable

(30) Priority: 08.04.1997 KR 9712899; 17.04.1997 KR 9714278
(43) Date of publication of application: 15.11.2000
(62) Divisional of application: 98106383.7
(73) Proprietor: LG ELECTRONICS INC., Seoul (KR); LG.PHILIPS LCD CO., LTD, Seoul (KR)
(72) Inventor: Yun, Hee Young, Kumi-shi, Kyungsangbook-do (KR); Moon, Kyo Hun, Kimcheon-shi, Kyungsangbook-do (KR); Lee, Byeong Yun, Changan-ku, Suwon-shi, Kyunggi-do (KR); Kim, Yong Bum, Kumi-shi, Kyungsangbook-do (KR); Bang, Young Un, Ansan-shi, Kyunggi-do (KR)
(74) Representative: Viering, Jentschura & Partner

(56) References cited:
- EP-A- 0 604 872
- US-A- 5 216 411
- US-A- 5 432 626
- PATENT ABSTRACTS OF JAPAN vol. 017, no. 416 (P-1584), 3 August 1993 (1993-08-03) & JP 05 080334 A (ROHM CO LTD), 2 April 1993 (1993-04-02)
- "CELL SUPPORT ASSEMBLY WITHOUT SCREW" IBM TECHNICAL DISCLOSURE BULLETIN, vol. 37, no. 12, 1 December 1994 (1994-12-01), page 33 XP000487692
- "STRUCTURE DESIGN FOR LIQUID CRYSTAL DISPLAY MODULE" IBM TECHNICAL DISCLOSURE BULLETIN, vol. 39, no. 1, 1 January 1996 (1996-01-01), pages 71-73, XP000556325

## Description

The invention relates to a an LCD board for a portable computer or for a portable display apparatus.

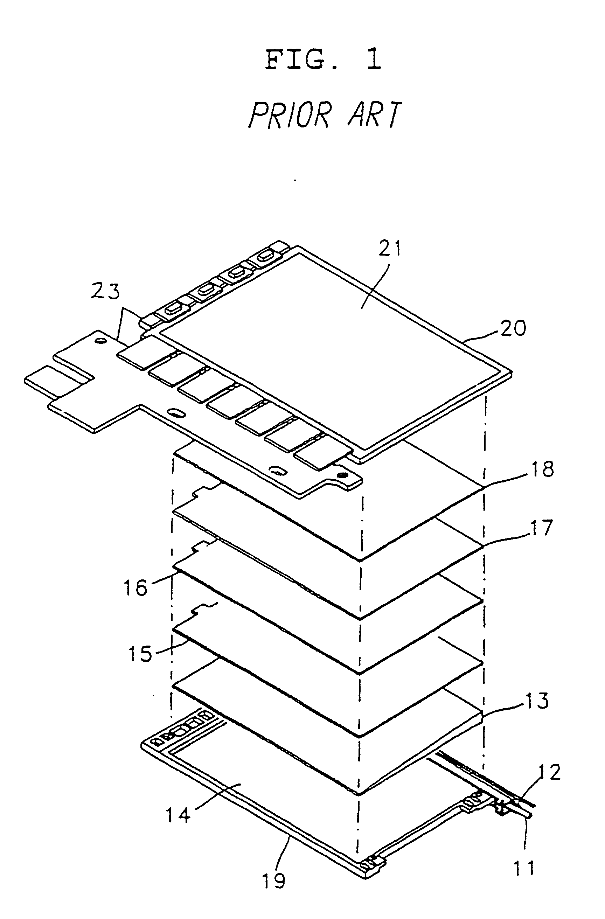

In general, a liquid crystal display (LCD) device used for a computer such as a portable computer or for a portable display is shown in Fig. 1. Referring to Fig. 1, the LCD device includes a liquid crystal panel 20 (LC panel), a back light unit, and a driving circuit board 23. The back light unit is comprised of a luminescent lamp 11, a lamp housing 12 having a U-shape and surrounding the lamp 11, a light guide 13, a reflector 14 reflecting the incident light from the horizontal direction to the vertical direction, a protection sheet 15 contacting the light guide 13, a first prism sheet 16 and a second prism sheet 17 set on the protecting sheet 15 and condensing the incident light from the light guide 13 to some direction, a diffuser 18 diffusing the light from the first and second prisms 16 and 17 to a viewing area 21 of the liquid crystal panel 20 with a certain viewing angle, and a first support frame 19 supporting these elements.

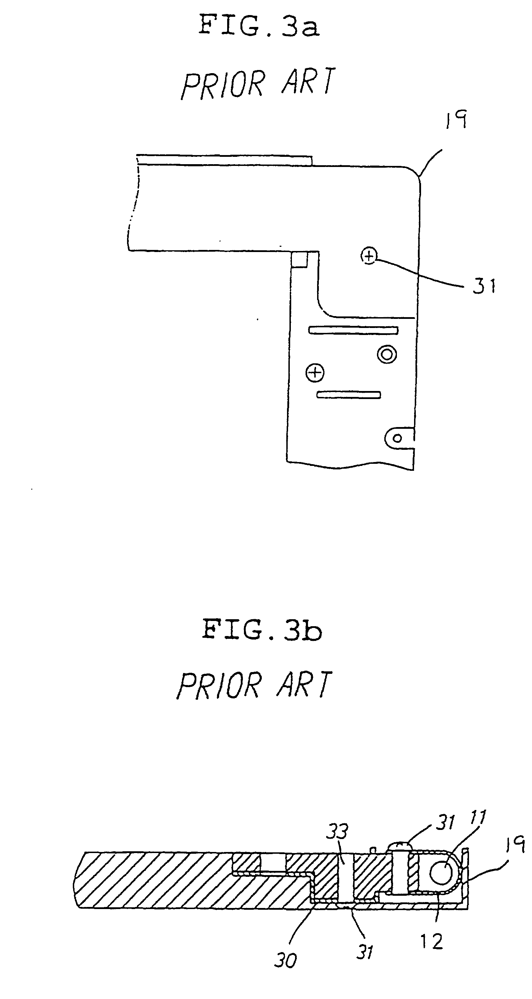

Fig. 3 shows a cross-sectional view of the light-guiding plate 13 showing a thickness which gradually decreases as it extends away from the light source 11. A fluorescent lamp 11 as the light source is fixed at a thicker end of the light-guiding plate 13. When the fluorescent lamp 11 is turned on, the light 23 from the source 11 is reflected by the lamp housing 12 surrounding the fluorescent lamp 11. The reflected light transmits through the cross-section towards the other side (thinner end) of the light-guiding plate 13 as indicated by the arrows. Then, the light spreads all over the surface of the light-guiding plate 13 and reaches the display area 21 (Fig. 1) through the diffusion plate 18. At the same time, a thin film transistor formed on the liquid crystal panel controls a corresponding pixel according to the signals from the driving circuit 30 (Fig. 1) to selectively transmit the light which collectively realizes the display of images on the display area.

The liquid crystal display is usually combined with, for example, a notebook computer as an output screen. The following method is used to fix the liquid crystal display to a device such as a notebook computer.

Referring to Figs. 3a and 3b, in a conventional liquid crystal display, a ground supporting plate 30 is disposed on the first support frame 19. A mounting hole 33 is formed through the ground supporting plate 30 and the first support frame 19, as shown in Fig. 3b. Then, the ground supporting plate 30 and the first support frame 19 are fixed by a screw 31 as shown in Fig. 3a. In other words, a liquid crystal display is fixed to a device such as a notebook computer so as to fasten the first support frame 19 and the ground supporting plate 30 by a fastening element such as a screw.

However, the liquid crystal display becomes thicker due to the length of the screw according to the method as shown in Figs. 3a and 3b. Moreover, since the mounting hole 33 for the screw is formed on the front surface of the liquid crystal display, the display area of the liquid crystal display becomes narrow.

According to the structure described above, the LCD device operates as follows. The light from the luminescent lamp 11 is incident on the rear surface of the liquid crystal panel 20 through the back light unit. A control circuit placed on the driving circuit board 30 controls the incident light on the viewing area 21 of the liquid crystal panel 20 to display images and characters.

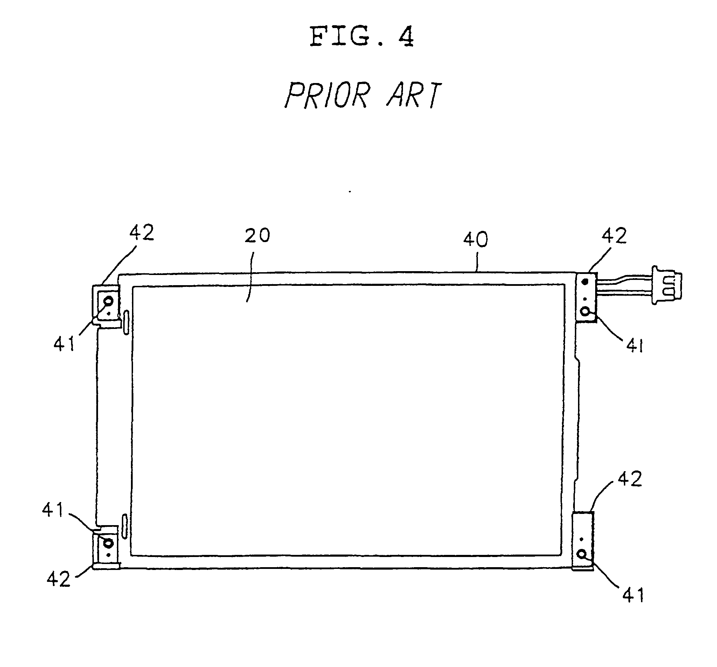

Fig. 4 is a drawing showing a plan view of the final assembly structure of the conventional liquid crystal display device. Fig. 4 also shows the assembled result of a second support frame 40, liquid crystal panel 20 and back light unit having an assembly structure for mounting to a portable computer. The second support frame 40 is made of metal or plastic, and holds the liquid crystal panel 20 and the back light unit. Here, the driving circuit board 23 is located behind the rear part of the back light unit connected to the liquid crystal panel 20 with a flexible film (not shown).

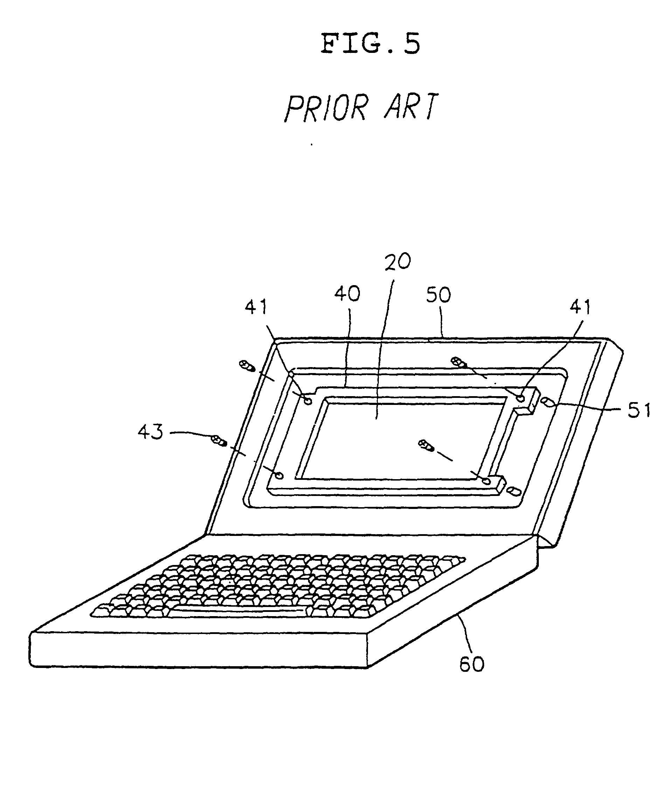

Fig. 5 shows the assembly structure of the liquid crystal panel 20 and body 60 of the portable computer in the conventional method. The second support frame 40 is mounted to a rear casing 50 of the portable computer using screws 43 extending through screw holes 41. A front case (not shown) having a blank area adjusted to the viewing area is joined at the rear casing 50. That is, the liquid crystal panel 20 is mounted with the rear casing 50 by the screws 43 locked in the normal direction of the display surface through the screw holes 41 formed on that surface. Although not shown in the drawings, the front case is mounted on the LCD device, opening the viewing area 21 and covering the other parts.

In general, as the size of the portable computer is designed for easy movement, the same goes for an A4 copy sheet, for example. Therefore, the ratio of the viewing area to the whole surface area of the display and the thickness of the display device affect the quality of the portable computer. However, in a conventional portable computer, screw holes 41 are located on edge portions of the display surface in order to join the second support frame 40 to the rear case 50. As the display area has a screw frame area 42 (Fig. 4) for forming the holes 41, the ratio of the area of the LC panel to the viewing area 21 is reduced.

Furthermore, in the conventional portable computer, as the screws 43 are locked to the liquid crystal display device and the rear case 50 in the normal direction of the display surface, the display part is thick enough to form an assembly device 51 for the screws 43, such as screw holes 41. The second support frame 40 is also large enough to have a space for supporting the screw holes 41. Thus, it is difficult to reduce the weight of the portable computer.

A similar LCD device and LCD board is disclosed in JP 7199180. The LCD board includes an LC panel and a backlight unit of the LC panel and a mounting frame, the backlight unit having a light source and forming with the LC panel a stacked plate assembly, substantially as described above with respect to fig. 1. The mounting frame extends along the edges of the display surface of the LC panel and the side walls of the stacked plate assembly, thereby accomodating and joining the stacked plate assembly. The monting frame is composed of an outer support frame and an inner support frame wherein the side walls of the outer and inner support frames overlap each other. The outer and inner support frames are attached to each other by a plurality of tongues which are cut out of the sidewall of the outer support frame and are bent into respective openings formed in the side wall of the inner support frame. The LCD board assembled in this way by its mounting frame is frontally laid in a cover of a portable computer and is frontally fastened to the cover by means of fastenening elements in the form of screws extending in a direction perpendicular to the plane of the outer display surface of the LCD board through lateral projections at the corners of the outer support frame of the board.

Accordingly, a liquid crystal device is needed having a high viewing ratio of the display, low weight, and reduced thickness for a computer, such as a portable computer.

US 5,216,411 discloses a cover for an indicator panel of an electronic apparatus, e.g. a video tape recorder, which cover is pivotally mounted between the side walls of a recess of the front side of the main body of the electronic apparatus so as to cover the indicator panel of the electronic apparatus in a closed state and functions as a control panel in an open state. To this end, the cover includes an outer frame and an inner frame and a panel holder therebetween for a pair of transparent touch sensitve panels in front of a pair of transparent display panels which may be made of liquid crystal. A plurality of light sources are provided in the panel holder for illumination of the display panels through the lower edges thereof. Each of the frames is formed with left and right side walls with a pair of through-holes receiving screws for tightening the side walls. An outer panel made of translucent acrylic resin is mounted to the frames at a given distance from the display panels by lateral hooks and screws. When all the screws are tightened, the cover is integrally assembled. The hinge connection to the main body of the electronic apparatus is realised by hinge pins integrally formed at the right and left side walls of the outer frame.

Further, portable computers are known with a hinged cover joined with the main body of the portable computer, the cover being composed of an open frame member and an integrated display/input board within the frame member, wherein the display/input board may include an LC panel which is overlaid by a touch sensitive panel thereby also serving as an input surface of the board. The board may be hinged to the frame member by lateral hinge pins mounted at opposite sidewalls of the board to be rotated through 180° and locked in its rotational positions by lateral locking pins adjustable to engage in locking pin holes in a side wall of the board (EP-A2-0 454 120, US-A-5 233 502). In another embodiment of turnable display boards, the board is laterally inserted into a lateral recess of the pocket-like frame member while having releasable latch means on either side of the board for latching the board within the recess of the frame member (US-A-5 276 589). , the board can optionally be turned with the display/input surface facing the inner or outer sides of the cover. By having the display/input boards turnably mounted within the frame member, the bords may also serve as a display/input device when the cover is closed and the display/input surface of the board faces the outer side of the cover.

The present invention is directed to an LCD board that substantially obviates one or more of the problems due to limitations and disadvantages of the related art.

An object of the present invention is to enable to increase the ratio of the viewing area of the display to nearly the whole area of a mounting frame of the LCD board.

Another object of the present invention is to provide a thin, light weight display unit.

The invention is described in the claims.

The features and advantages of the invention will be set forth in the written description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, an LCD board especially comprises a liquid crystal (LC) panel, a backlight unit of the LC panel and a mounting frame, the backlight unit having a light source, the mounting frame extending along the edges of the display surface and the side walls of the board thereby accomodating and joining the LC panel and the backlight unit, and the mounting frame comprising an inner support frame and an outer support frame between which the LC panel and the backlight unit with the light source are arranged and which include overlapping side walls at which the outer support frame and the inner support frame are attached to each other, wherein said mounting frame includes lateral mounting pin holes formed in at least one of the side walls of the mounting frame to axially extend in parallel with the display surface of the board, said mounting pin holes being adapted to be clampingly or screwingly engaged with fastening pins for laterally fixing the LCD board between side walls of a casing frame, wherein the mounting pin holes are formed in at least one of the side walls of the inner support frame.

It is to be understood that both the foregoing general description and the following detailed description are exemplary and explanatory and are intended to provide further explanation of the invention as claimed.

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a perspective drawing showing the structure of the conventional LCD device;

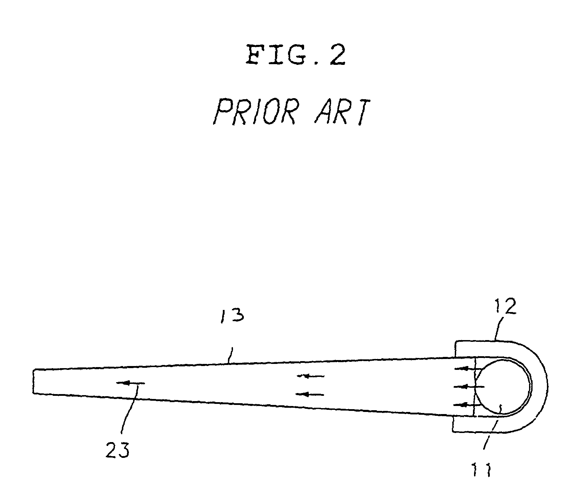

Fig. 2 is a cross-sectional view of a light-guiding plate and a fluorescent lamp;
Fig. 3a is a plan view of an LCD showing a screw frame of a first fastening frame;
Fig. 3b is a cross-sectional view of an LCD illustrating a first fastening frame, a lamp housing, and ground support plates fixed together by a screw;
Fig. 4 shows a plan view of the final assembly structure of the LC panel, support frame, and back light unit in the conventional LCD device;
Fig. 5 shows an assembly structure of the LCD device in the conventional portable computer;
Fig. 6 is a perspective view showing the assembly structure of the parts of the LC board in accordance with one embodiment of the present invention;
Fig. 7 is a perspective view of the assembly structure of an LCD board, a rear cover or casing frame, and a front cover in accordance with the present invention;
Fig. 8a and 8b are cross-sectional side views of an LCD board according to the present invention illustrating mounting holes at a side wall of the mounting frame, Fig. 8c showing a sectional part view along the section line in Fig. 8b; and
Fig. 9 shows an assembly structure of an LCD board in accordance with the present invention and a portable computer in which the LCD board is laterally fixed.

Reference will now be made in detail to the preferred embodiments of the present invention, examples of which are illustrated in the accompanying drawings.

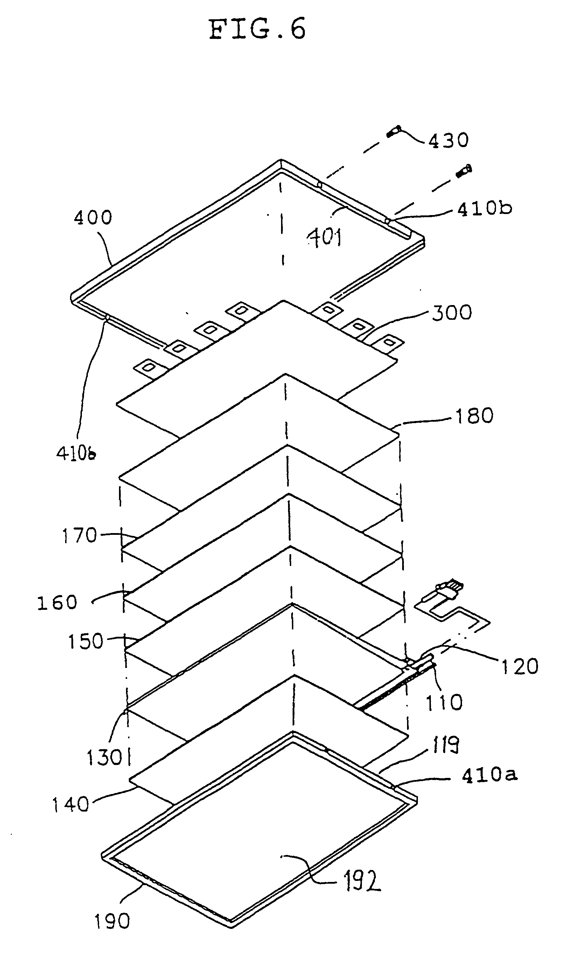

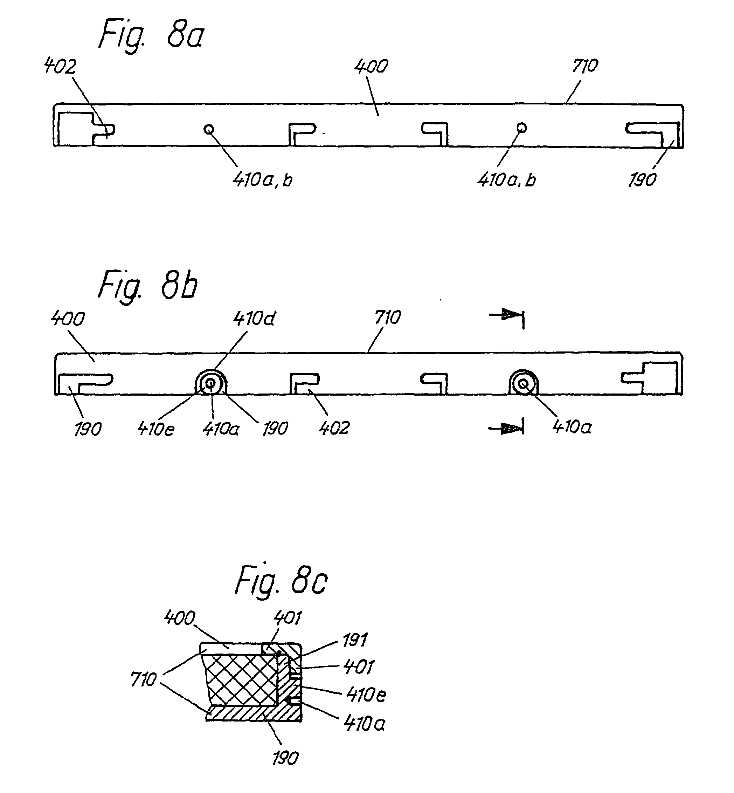

The present invention provides mounting holes for fastening pins on a side wall of an LCD board instead of on a front surface of an LCD board. For example, Fig. 8a and 8b show first mounting holes 410a formed on opposite side walls of a mounting frame 710. With reference to Fig. 6, the structure of an LCD board according to the present invention will be described in detail.

Referring to Fig. 6, on an inner support frame 190 made of plastic, for example, a reflector 140, a light guide 130, a protection sheet 150, a first prism sheet 160, a second prism sheet 170, a diffuser 180, and an LC panel 300 are stacked sequentially. The inner support frame has a bottom wall 192 and four side walls 191 extending at right angles from the bottom wall. On opposite side walls 191 of the inner support frame 190, a plurality of lateral first screw holes 410a are formed.

At the edge of the light guide 130, a luminescent lamp 110 and a lamp housing 120 are mounted. The lamp housing 120 has an U-shape and surrounds the luminescent lamp 110 at three sides adjacent to the respective side wall 191 of the inner support frame.

In order to join the inner support frame 190, the LC panel 300, the backlight unit 130-180 and the lamp housing 120, an outer support frame 400 preferably made of metal is mounted at the side wall of the inner support frame 190. When mounted, the outer support frame 400 and the inner support frame overlap each other at their side walls 401, 191. At the side wall 401 of the outer support frame 400, a plurality of second through holes 410b aligned with the first screw holes 410a as shown in Fig. 8a are formed.

Referring to Figs. 8a and 8b, the outer frame 400 and the inner frame 190 may be mounted together by a plurality of tongues 402 bent into respective depressions in the side wall of the inner frame 190. According to Figs. 8b and 8c, the side wall of the inner frame 190 is formed with a plurality of lugs 410e in which the screw holes 410a are formed and which extend through respective cutouts 410 of the side wall 401 of the outer frame 401.

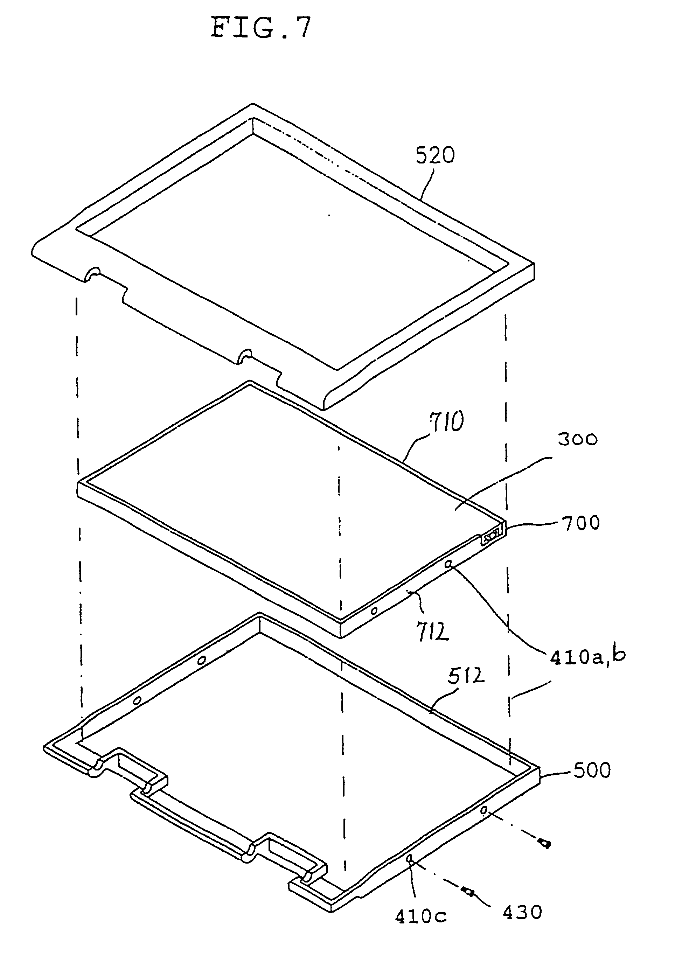

Referring to Fig. 7, an LCD board 700 comprising the mounting frame 710 e.g. of the inner support frame 190 and the outer support frame 400 accomodating the LC panel 300 and the backlight unit (not shown in Fig. 7) is joined with a casing frame 500 at its side wall 712 and a front frame 520. At the side wall of the casing frame 500, third through holes 410c aligned with the first screw holes and second through holes 410a,b are formed. The casing frame 500 and the LCD board 700 are joined to each other by fastening screw pins 430, which extend through and may be locked to the second and third through holes 410b and 410c. Although not shown in the drawings, the screws 430 are locked with the first screw holes 410a.

Accordingly, in the present invention, the fastening pins are engaging the side walls of the display and are not at the front or back side. The direction of the fastening pins is normal to the side wall of the display, that is, in parallel direction with the front (viewing) outer surface of the display. Moreover, assembling devices may be formed on the upper and lower sides of the display.

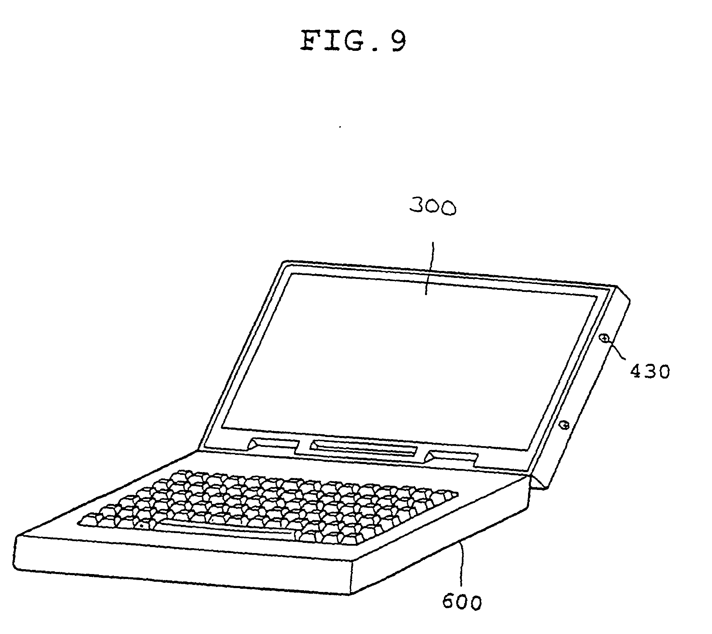

Referring to Fig. 9, the LCD board is mounted to a portable computer. One of the advantages of the present invention over the conventional LCD boards is the higher proportion of the viewing area. Because there are no fastening elements on the display surface, the outer frame of the display area of the present invention is narrower than that of conventional ones. Thus, the proportion of the viewing area can be maximized and the thickness of the display part is made thinner than that of conventional ones.

Furthermore, as the volume of the frames of the present invention is smaller than that of conventional ones, the display board of the present invention is lighter.

## Claims

1. LCD board (700) for a portable computer, comprising an LC panel (300), a backlight unit (130-180) of the LC panel and a mounting frame (710), the backlight unit having a light source (110, 120), the mounting frame extending along the edges (410) of the display surface and the side walls of the board thereby accomodating and joining the LC panel and the backlight unit, and the mounting frame (710) comprising an inner support frame (190) and an outer support frame (400) between which the LC panel (300) and the backlight unit (130-180) with the light source (110, 120) are arranged and which include overlapping side walls (191, 401), at which the outer support frame (400) and the inner support frame (190) are attached to each other, wherein said mounting frame includes lateral mounting pin holes (410a) formed in at least one of the side walls (712) of the mounting frame to axially extend in parallel with the display surface of the board, said mounting pin holes being adapted to be clampingly or screwingly engaged with fastening pins (430) for laterally fixing the LCD board between side walls of a casing frame, **characterized in that** the mounting pin holes (410a) are formed in at least one of the side walls of the inner support frame.

2. LCD board according to claim 1, wherein said mounting pin holes (410a) in the at least one side wall of the inner support frame are aligned with respective openings (410b, 410d) in the adjoining side wall of the outer support frame.

3. LCD board according to claim 2, wherein the inner support frame (190) includes at its at least one side wall (191) a plurality of lugs (410e) formed with the mounting pin holes (410a), the respective openings (410d) in the adjoining side wall (401) of the outer support frame (400) being formed as a plurality of cutouts each of which receiving one of the lugs.

4. LCD board according to claim 2, wherein the openings (410b) in the adjoining side wall of the outer support frame (400) are through holes.

5. LCD board according to any of claims 1 to 4, wherein the outer support frame (400) and the inner support frame (190) are attached to each other by a plurality of tongues (402) bent into respective depressions formed in a side wall of the inner support frame (190).

6. LCD board according to any of claims 1 to 5, wherein said mounting pin holes are two lateral screw holes (410) in said at least one of the side walls (712) of the mounting frame (710).

7. LCD board according to any of claims 1 to 6, wherein the mounting pin holes (410a) are formed in opposite side walls of the mounting frame (710).

8. LCD board according to any of claims 1 to 7, wherein the backlight unit comprises sequentially stacked in the inner support frame (190):
a reflector unit (140) adjacent to a bottom wall (192) of the inner support frame (190);
the light source (110, 120) adjacent to the reflector unit;
a light guide unit (130) adjacent to the reflector unit;
a protection unit (150) adjacent to the light guide unit;
a prism unit (160, 170) adjacent to the protection unit;
a diffuser unit (180) adjacent to the prism unit; the LC panel (300) being placed adjacent to the diffuser unit and between the diffuser unit and the outer support frame unit (400).

9. LCD board according to any of claims 1 to 8, wherein the lamp (110) of the light source is surrounded by a U-shaped lamp housing (120) at three sides adjacent to the respective side wall (191) of the inner support frame (190).

## Patentansprüche

1. LCD-Tafel (700) für einen tragbaren Computer, aufweisend ein LC-Paneel (300), eine Hintergrundbeleuchtungseinheit (130-180) des LC-Paneels und einen Montagerahmen (710), wobei die Hintergrundbeleuchtungseinheit eine Lichtquelle (110, 120) aufweist, wobei sich der Montagerahmen entlang der Ränder (401) der Anzeigefläche und der Seitenwände der Tafel erstreckt, wobei er dadurch das LC-Paneel und die Hintergrundbeleuchtungseinheit unterbringt und aneinanderfügt, und wobei der Montagerahmen (710) einen inneren Halterahmen (190) und einen äußeren Halterahmen (400) aufweist, zwischen denen das LC-Paneel (300) und die Hintergrundbeleuchtungseinheit (130-180) mit der Lichtquelle (110, 120) angeordnet sind und welche überlappende Seitenwände (191, 401) aufweisen, an denen der äußere Halterahmen (400) und der innere Halterahmen (190) aneinander angebracht sind, wobei der Montagerahmen seitliche Montagestiftlöcher (410a) aufweist, die in wenigstens einer der Seitenwände (712) des Montagerahmens so ausgebildet sind, dass sie sich axial parallel zur Anzeigefläche der Tafel erstrecken, wobei die Montagestiftlöcher so angepasst sind, dass sie mit Festlegungsstiften (430) zum seitlichen Fixieren der LCD-Tafel zwischen Seitenwänden eines Gehäuserahmens in Klemm- oder Schraubeingriff gebracht werden, **dadurch gekennzeichnet, dass** die Montagestiftlöcher (410a) in wenigstens einer der Seitenwände des inneren Halterahmens ausgebildet sind.

2. LCD-Tafel nach Anspruch 1, wobei die Montagestiftlöcher (410a) in der wenigstens einen Seitenwand des inneren Halterahmens mit entsprechenden Öffnungen (410b, 410d) in der angrenzenden Seitenwand des äußeren Halterahmens fluchten.

3. LCD-Tafel nach Anspruch 2, wobei der innere Halterahmen (190) an seiner zumindest einen Seitenwand (191) eine Mehrzahl von mit den Montagestiftlöchern (410a) ausgebildeten Vorsprüngen (410e) aufweist, wobei die entsprechenden Öffnungen (410d) in der angrenzenden Seitenwand (401) des äußeren Halterahmens (400) als eine Mehrzahl von Ausnehmungen ausgebildet sind, von denen jede einen der Vorsprünge aufnimmt.

4. LCD-Tafel nach Anspruch 2, wobei die Öffnungen (410b) in der angrenzenden Seitenwand (401) des äußeren Halterahmens (400) Durchgangslöcher sind.

5. LCD-Tafel nach einem der Ansprüche 1 bis 4, wobei der äußere Halterahmen (400) und der innere Halterahmen (190) mittels einer Mehrzahl von Zungen (402) aneinandergefügt sind, die in entsprechende, in einer Seitenwand des inneren Halterahmens (190) ausgebildete Vertiefungen gebogen sind.

6. LCD-Tafel nach einem der Ansprüche 1 bis 5, wobei die Montagestiftlöcher zwei seitliche Gewindelöcher (410) in wenigstens einer der Seitenwände (712) des Montagerahmens (710) sind.

7. LCD-Tafel nach einem der Ansprüche 1 bis 6, wobei die Montagestiftlöcher (410a) in gegenüberliegenden Seitenwänden des Montagerahmens (710) ausgebildet sind.

8. LCD-Tafel nach einem der Ansprüche 1 bis 7, wobei die Hintergrundbeleuchtungseinheit, in dem inneren Halterahmen hintereinander gestapelt, aufweist:
eine an eine Bodenwandung (192) des inneren Halterahmens (190) angrenzende Reflektoreinheit (140);
die an die Reflektoreinheit angrenzende Lichtquelle (110, 120);
eine an die Reflektoreinheit angrenzende Lichtleitereinheit (130);
eine an die Lichtleitereinheit angrenzende Schutzeinheit (150);
eine an die Schutzeinheit angrenzende Prismeneinheit (160, 170);
eine an die Prismeneinheit angrenzende Diffusoreinheit (180);
wobei das LC-Paneel (300) an die Diffusoreinheit angrenzend und zwischen der Diffusoreinheit und der äußeren Halterahmeneinheit (400) angeordnet ist.

9. LCD-Tafel nach einem der Ansprüche 1 bis 8, wobei die Lampe (110) der Lichtquelle an drei an die entsprechende Seitenwand (191) des inneren Halterahmens (190) angrenzenden Seiten von einem U-förmigen Lampengehäuse (120) umgeben ist.

## Revendications

1. Carte d'affichage à cristaux liquides ACL (700) pour ordinateur portable, comprenant un panneau à cristaux liquides CL (300), une unité de rétroéclairage (130 - 180) du panneau CL et un cadre de montage (710), l'unité de rétroéclairage possédant une source de lumière (110, 120), le cadre de montage se prolongeant le long des bords (410) de la surface d'affichage et des parois latérales de la carte, en logeant et en joignant de ce fait le panneau CL et l'unité de rétroéclairage, et le cadre de montage (710) comprenant un cadre de support intérieur (190) et un cadre de support extérieur (400) entre lesquels le panneau CL (300) et l'unité de rétroéclairage (130 - 180) avec la source de lumière (110, 120) sont disposés et qui comprennent des parois latérales qui se chevauchent (191, 401) au niveau desquelles le cadre de support extérieur (400) et le cadre de support intérieur (190) sont attachés l'un à l'autre, dans laquelle ledit cadre de montage comprend des trous d'épingle de montage latéraux (410a) formés dans au moins une des parois latérales (712) du cadre de montage pour s'étendre de manière axiale et parallèle à la surface d'affichage de la carte, lesdits trous d'épingle de montage étant conçus pour être mis en prise de manière serrante ou de manière vissante avec des goupilles de fixation (430) pour fixer latéralement la carte ACL entre les parois latérales d'un cadre d'enveloppe, **caractérisée en ce que** les trous d'épingle de montage (410a) sont formés dans au moins une des parois latérales du cadre de support intérieur.

2. Carte ACL selon la revendication 1, dans laquelle lesdits trous d'épingle de montage (410a) dans l'au moins une paroi latérale du cadre de support intérieur sont alignés avec des ouvertures respectives (410b, 410d) dans la paroi latérale contiguë du cadre de support extérieur.

3. Carte ACL selon la revendication 2, dans laquelle le cadre de support intérieur (190) comprend à sa au moins une paroi latérale (191) une pluralité d'oreilles (410e) formées avec les trous d'épingle de montage (410a), les ouvertures respectives (410d) dans la paroi latérale contiguë (401) du cadre de support extérieur (400) étant formées comme une pluralité de découpes dont chacune reçoit l'une des oreilles.

4. Carte ACL selon la revendication 2, dans laquelle les ouvertures (410b) situées dans la paroi latérale contiguë du cadre de support extérieur (400) sont des trous traversants.

5. Carte ACL selon l'une quelconque des revendications 1 à 4, dans laquelle le cadre de support extérieur (400) et le cadre de support intérieur (190) sont attachés l'un à l'autre par une pluralité de langues (402) pliées dans des dépressions respectives formées dans une paroi latérale du cadre de support intérieur (190).

6. Carte ACL selon l'une quelconque des revendications 1 à 5, dans laquelle lesdits trous d'épingle de montage sont deux trous de vis latéraux (410) dans ladite au moins une des parois latérales (712) du cadre de montage (710).

7. Carte ACL selon l'une quelconque des revendications 1 à 6, dans laquelle les trous d'épingle de montage (410a) sont formées dans des parois latérales opposées du cadre de montage (710).

8. Carte ACL selon l'une quelconque des revendications 1 à 7, dans laquelle l'unité de rétroéclairage comprend, empilées de manière successive dans le cadre de support intérieur (190) :
une unité de réflecteur (140) contiguë à une paroi inférieure (192) du cadre de support intérieur (190) ;
la source de lumière (110, 120) contiguë à l'unité de réflecteur ;
une unité de guide de lumière (130) contiguë à l'unité de réflecteur ;
une unité de protection (150) contiguë à l'unité de guide de lumière ;
une unité de prisme (160, 170) contiguë à l'unité de protection ;
une unité de diffuseur (180) contiguë à l'unité de prisme ;
le panneau CL (300) étant placé contigu à l'unité de diffuseur et entre l'unité de diffuseur et l'unité de cadre de support extérieur (400).

9. Carte ACL selon l'une quelconque des revendications 1 à 8, dans laquelle la lampe (110) de la source de lumière est entourée par un logement de lampe en forme de U (120) sur trois côtés contigu à la paroi latérale respective (191) du cadre de support intérieur (190).
